(19) **Europäisches Patentamt / European Patent Office / Office européen des brevets**

(11) **EP 4 579 782 A1**

(12) **EUROPEAN PATENT APPLICATION**
published in accordance with Art. 153(4) EPC

(43) Date of publication:
**02.07.2025 Bulletin 2025/27**

(21) Application number: **23857601.1**

(22) Date of filing: **02.08.2023**

(51) International Patent Classification (IPC):
**H01M 4/131** (2010.01)    **H01M 4/525** (2010.01)
**H01M 4/02** (2006.01)

(52) Cooperative Patent Classification (CPC):
**H01M 4/02; H01M 4/131; H01M 4/525; Y02E 60/10**

(86) International application number:
**PCT/KR2023/011314**

(87) International publication number:
**WO 2024/043566 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.08.2022 KR 20220106999**

(71) Applicant: **SK On Co., Ltd.**
**Seoul 03161 (KR)**

(72) Inventors:
• **JO, Yoon Ji**
  **Daejeon 34124 (KR)**
• **KIM, Hyun Ji**
  **Daejeon 34124 (KR)**
• **LEE, Jong Hyeok**
  **Daejeon 34124 (KR)**
• **HWANG, Chang Mook**
  **Daejeon 34124 (KR)**

(74) Representative: **Stolmár & Partner**
**Patentanwälte PartG mbB**
**Blumenstraße 17**
**80331 München (DE)**

(54) **CATHODE FOR LITHIUM SECONDARY BATTERY, AND LITHIUM SECONDARY BATTERY COMPRISING SAME**

(57)    A cathode for a lithium secondary battery according to exemplary embodiments may include: a cathode current collector; and a cathode active material layer formed on the cathode current collector. The cathode active material layer may include: a first cathode active material layer formed on the cathode current collector, and including first lithium metal oxide particles having a form of secondary particles; a second cathode active material layer formed on the first cathode active material layer, and including second lithium metal oxide particles having a form of single particles; and a third cathode active material layer formed on the second cathode active material layer, and including third lithium metal oxide particles having a form of secondary particles.

[FIG. 1]

**Description**

[Technical Field]

The present disclosure relates to a cathode for a lithium secondary battery and a lithium secondary battery including the same, and more specifically, to a cathode for a lithium secondary battery which includes a cathode active material layer having a multilayer structure and a lithium secondary battery including the cathode.

[Background Art]

A secondary battery is a battery which can be repeatedly charged and discharged, and has been widely applied to portable electronic devices such as a mobile phone, a laptop computer, etc. as a power source thereof.

A lithium secondary battery has a high operating voltage and a high energy density per unit weight, and is advantageous in terms of a charging speed and light weight. In this regard, the lithium secondary battery has been actively developed and applied to various industrial fields.

For example, the lithium secondary battery may include: an electrode assembly including a cathode, an anode and a separation membrane interposed between the cathode and the anode; and an electrolyte in which the electrode assembly is impregnated in a case.

For example, the cathode may include a cathode current collector and a cathode active material layer formed on the cathode current collector. For example, the cathode active material layer may include lithium metal oxide particles as the cathode active material.

In general, the lithium metal oxide particles have a form of secondary particles in which a plurality of primary particles are aggregated in morphology, and the primary particles have a polycrystalline structure in crystallography.

However, in the case of the lithium metal oxide particles having the form of the secondary particles and the polycrystalline structure, cracks may occur in the particles during pressing in a process of preparing the cathode. In addition, cracks may occur in the particles due to intercalation and deintercalation of lithium ions during repeated charging and discharging of the lithium secondary battery.

Accordingly, problems such as gas generation due to a side reaction between the lithium metal oxide particles and an electrolyte, a decrease in life-span characteristics of the lithium secondary battery, and the like may occur. In addition, the above-described problems may be further intensified in a high-temperature environment.

[Summary of Invention]

[Problems to be Solved by Invention]

An object of the present disclosure is to provide a cathode active material for a lithium secondary battery having improved electrochemical performance and electrochemical stability.

Another object of the present disclosure is to provide a lithium secondary battery having improved electrochemical performance and electrochemical stability.

[Means for Solving Problems]

A lithium secondary battery according to exemplary embodiments of the present disclosure may include: a cathode current collector; and a cathode active material layer formed on the cathode current collector.

The cathode active material layer may include: a first cathode active material layer formed on the cathode current collector, and including first lithium metal oxide particles having a form of secondary particles in which primary particles are aggregated; a second cathode active material layer formed on the first cathode active material layer, and including second lithium metal oxide particles having a form of single particles; and a third cathode active material layer formed on the second cathode active material layer, and including third lithium metal oxide particles having a form of secondary particles in which primary particles are aggregated.

In one embodiment, the cathode may satisfy Equation 1 below:

[Equation 1]

$$0.2 \leq T2/(T1+T2+T3) \leq 0.7$$

In one embodiment, the cathode may satisfy Equation 2 below:

$$[\text{Equation 2}]$$

$$0.15 \leq T1/(T2+T3) \leq 0.85$$

In one embodiment, the cathode may satisfy Equation 3 below:

$$[\text{Equation 3}]$$

$$0.15 \leq T3/(T1+T2) \leq 0.85$$

In Equations 1 to 3, T1 is a thickness of the first cathode active material layer in a cross-sectional image of the cathode measured by SEM ("SEM image"), T2 is a thickness of the second cathode active material layer in the SEM image, T3 is a thickness of the third cathode active material layer in the SEM image.

In one embodiment, a sum of a thickness of the first cathode active material layer, a thickness of the second cathode active material layer and a thickness of the third cathode active material layer may be 40 $\mu$m to 180 $\mu$m.

In one embodiment, a content of the first lithium metal oxide particles based on a total weight of the first cathode active material layer may be 90% by weight or more.

In one embodiment, a content of the second lithium metal oxide particles based on a total weight of the second cathode active material layer may be 90% by weight or more.

In one embodiment, a content of the third lithium metal oxide particles based on a total weight of the third cathode active material layer may be 90% by weight or more.

In one embodiment, each of the first lithium metal oxide particles and the second lithium metal oxide particles may contain nickel (Ni), and a concentration of nickel in the first lithium metal oxide particles may be greater than a concentration of nickel in the second lithium metal oxide particles.

In one embodiment, each of the second lithium metal oxide particles and the third lithium metal oxide particles may contain nickel (Ni), and a concentration of nickel in the third lithium metal oxide particles may be greater than the concentration of nickel in the second lithium metal oxide particles.

In one embodiment, a particle diameter ($D_{50}$) of the first lithium metal oxide particles may be greater than a particle diameter ($D_{50}$) of the second lithium metal oxide particles.

In one embodiment, a particle diameter ($D_{50}$) of the third lithium metal oxide particles may be smaller than the particle diameter ($D_{50}$) of the first lithium metal oxide particles.

In one embodiment, a ratio of a particle diameter ($D_{50}$) of the third lithium metal oxide particles to a particle diameter ($D_{50}$) of the second lithium metal oxide particle may be 0.75 or more and less than 1.4.

In one embodiment, the first lithium metal oxide particles may have a particle diameter ($D_{50}$) of 5 $\mu$m to 15 $\mu$m, and the second lithium metal oxide particles and the third lithium metal oxide particles may have a particle diameter ($D_{50}$) of 1 $\mu$m to 5 $\mu$m, respectively.

A lithium secondary battery according to exemplary embodiments of the present disclosure may include: the cathode for a lithium secondary battery; and an anode disposed to face the cathode.

[Advantageous effects]

According to exemplary embodiments of the present disclosure, a cathode for a lithium secondary battery having improved output characteristics, life-span characteristics, high-temperature storage characteristics, and resistance characteristics may be provided.

According to exemplary embodiments of the present invention, a lithium secondary battery including the cathode having improved output characteristics, life-span characteristics, high-temperature storage characteristics, and resistance characteristics may be provided.

[Brief Description of Drawings]

FIG. 1 is a schematic cross-sectional view of a cathode for a lithium secondary battery according to exemplary embodiments.

FIGS. 2 and 3 are a plan view and a cross-sectional view of a lithium secondary battery according to exemplary embodiments, respectively.

[Mode for Carrying out Invention]

According to exemplary embodiments of the present disclosure, a cathode for a lithium secondary battery, which includes lithium metal oxide particles having a predetermined morphology and a cathode active material layer having a multilayer structure, is provided. In addition, a lithium secondary battery including the cathode is provided.

Hereinafter, a cathode for a lithium secondary battery and a lithium secondary battery according to exemplary embodiments of the present disclosure will be described in detail with reference to the accompanying drawings. However, the drawings and the embodiments are merely an example, and the present disclosure is not limited thereto.

## Cathode for a lithium secondary battery

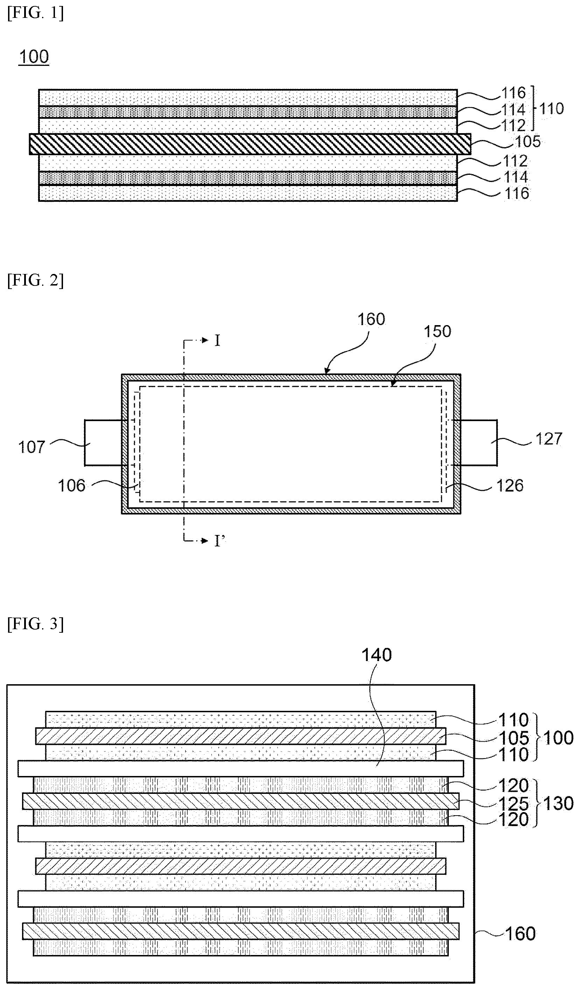

FIG. 1 is a cross-sectional view schematically illustrating a cathode for a lithium secondary battery (hereinafter, abbreviated as a cathode) according to an embodiment of the present disclosure.

Referring to FIG. 1, a cathode 100 may include a cathode current collector 105 and a cathode active material layer 110 formed on the cathode current collector 105. The cathode active material layer 110 may be formed on one surface or both surfaces of the cathode current collector 105.

The cathode active material layer 110 may include a first cathode active material layer 112, a second cathode active material layer 114 and a third cathode active material layer 116, which are sequentially formed on the cathode current collector 105.

In one embodiment, the first cathode active material layer 112 may be formed directly on the cathode current collector 105, the second cathode active material layer 114 may be formed directly on the first cathode active material layer 112, and the third cathode active material layer 116 may be formed directly on the second cathode active material layer 114.

The cathode active material layer 110 may include a cathode active material capable of intercalating and deintercalating lithium ions. For example, the cathode active material may include lithium metal oxide particles.

In one embodiment, the lithium metal oxide particles may include lithium cobalt oxide particles (LCOs), lithium manganese oxide particles (LMOs), lithium nickel oxide particles (LNOs), lithium nickel-manganese oxide particles (LNMOs), lithium nickel-cobalt-manganese oxide particles (NCMs), lithium nickel-cobalt-aluminum oxide particles (NCAs), lithium phosphate-iron particles (LFPs), over-lithiated oxide particles (OLOs) and the like.

In exemplary embodiments of the present disclosure, the first cathode active material layer 112 may include first lithium metal oxide particles having a form of secondary particles in which a plurality of primary particles are aggregated.

The second cathode active material layer 114 may include second lithium metal oxide particles having a single particle form.

The third cathode active material layer 116 may include third lithium metal oxide particles having a form of secondary particles in which a plurality of primary particles are aggregated.

For example, depending on the combination of the first cathode active material layer 112, the second cathode active material layer 114 and the third cathode active material layer 116, the resistance characteristics of the cathode, as well as the output characteristics, life-span characteristics and high-temperature storage characteristics of the lithium secondary battery may be improved.

The secondary particle and the single particle may be distinguished from each other in morphology. For example, the secondary particle and the single particle may be distinguished from each other based on a cross-sectional image of the particle measured by a scanning electron microscope (SEM).

For example, the secondary particle includes a plurality of primary particles, and a boundary of the primary particles may be observed in the cross-sectional SEM image. For example, the secondary particle may have greater than 10, 30 or more, 50 or more, or 100 or more of primary particles aggregated therein.

For example, the single particle may mean a monolithic body rather than an aggregate, and the boundary of the primary particles may not be observed in the cross-sectional SEM image, unlike the secondary particle.

Meanwhile, the single particle may have a form in which fine particles (e.g., particles having a volume of 1/100 or less based on a volume of the single particle) are attached to the surface thereof, and the form is not excluded from the concept of the single particle.

For example, the single particles may be present in contact with each other. For example, 2 to 10, 2 to 5, or 2 and 3 single particles may be present in contact with each other.

In one embodiment, the cathode 100 may satisfy Equation 1 below. Accordingly, the life-span characteristics and high-temperature storage characteristics of the lithium secondary battery may be further improved.

## [Equation 1]

$$0.2 \le T2/(T1+T2+T3) \le 0.7$$

In some embodiments, T2/(T1+T2+T3) may be 0.2 to 0.5, or 0.25 to 0.4.

In one embodiment, the cathode 100 may satisfy Equation 2 below. In this case, the resistance characteristics of the cathode may be further improved.

## [Equation 2]

$$0.15 \le T1/(T2+T3) \le 0.85$$

In some embodiments, T1/(T2+T3) may be 0.15 to 0.7, 0.2 to 0.65, 0.3 to 0.6, or 0.4 to 0.6.

In one embodiment, the cathode 100 may satisfy Equation 3 below. In this case, the output characteristics of the lithium secondary battery may be further improved.

## [Equation 3]

$$0.15 \le T3/(T1+T2) \le 0.85$$

In some embodiments, T3/(T1+T2) may be 0.15 to 0.7, 0.2 to 0.65, 0.3 to 0.6, or 0.4 to 0.6.

In Equations 1 to 3, T1 is a thickness of the first cathode active material layer 112 in a cross-sectional image of the cathode measured by SEM ("SEM image"), T2 is a thickness of the second cathode active material layer 114, and T3 is a thickness of the third cathode active material layer 116 in the SEM image.

In some embodiments, T2/(T1+T2+T3) may be 0.25 to 0.4, T1/(T2+T3) may be 0.4 to 0.6, and T3/(T1+T2) may be 0.4 to 0.6. Within the above range, the output characteristics, life-span characteristics, high-temperature storage characteristics and resistance characteristics of the lithium secondary battery may be further improved.

In one embodiment, the cathode active material layer 110 may have a thickness (e.g., a sum of T1, T2 and T3) of 20 $\mu$m to 500 $\mu$m, 30 $\mu$m to 450 $\mu$m, 35 $\mu$m to 300 $\mu$m, 40 $\mu$m to 250 $\mu$m, 40 $\mu$m to 200 $\mu$m, 40 $\mu$m to 180 $\mu$m. 40 $\mu$m to 160 $\mu$m, 50 $\mu$m to 160 $\mu$m, 60 $\mu$m to 160 $\mu$m, or 80 $\mu$m to 160 $\mu$m. Within the above range, the output characteristics, life-span characteristics, high-temperature storage characteristics, and resistance characteristics of the lithium secondary battery may be further improved. In addition, an energy density of the lithium secondary battery may be further improved.

In one embodiment, the cathode active material layer 110 may further include a conductive material and a binder.

In some embodiments, the binder may include an organic binder such as polyvinylidene fluoride (PVDF), vinylidene fluoride-hexafluoropropylene copolymer (PVDF-co-HFP), polyacrylonitrile, polymethyl methacrylate (PMMA), etc.; and an aqueous binder such as styrene-butadiene rubber (SBR), etc. For example, the binder may be used together with a thickener such as carboxymethyl cellulose (CMC).

In some embodiments, the conductive material may include a carbon-based conductive material such as graphite, graphene, carbon black, denka black, carbon nanotubes (CNTs), etc.; a metal-based conductive material such as tin, tin oxide, titanium oxide, or a perovskite material such as $LaSrCoO_3$, and $LaSrMnO_3$, etc.

In one embodiment, a content of the first lithium metal oxide particles based on a total weight of the first cathode active material layer 112 may be 70% by weight ("wt%") or more, in one embodiment 80 wt% or more, and in one embodiment 90 wt% or more.

In one embodiment, a content of the second lithium metal oxide particles based on a total weight of the second cathode active material layer 114 may be 70 wt% or more, in one embodiment 80 wt% or more, and in one embodiment 90 wt% or more.

In one embodiment, a content of the third lithium metal oxide particles based on a total weight of the third cathode active material layer 116 may be 70 wt% or more, in one embodiment 80 wt% or more, and in one embodiment 90 wt% or more.

In one embodiment, a particle diameter ($D_{50}$) of the first lithium metal oxide particles may be larger than a particle diameter ($D_{50}$) of the second lithium metal oxide particles. Accordingly, the resistance characteristics of the cathode may be further improved.

In one embodiment, a particle diameter ($D_{50}$) of the third lithium metal oxide particles may be smaller than the particle diameter ($D_{50}$) of the first lithium metal oxide particles.

In one embodiment, the particle diameter ($D_{50}$) of the first lithium metal oxide particles may be 3 $\mu$m to 20 $\mu$m, in one embodiment 4 $\mu$m to 18 $\mu$m, and in one embodiment 5 $\mu$m to 15 $\mu$m.

In one embodiment, the particle diameter ($D_{50}$) of the second lithium metal oxide particles may be 1 $\mu$m to 9 $\mu$m, in one embodiment 1 $\mu$m to 7 $\mu$m, and in one embodiment 1 $\mu$m to 5 $\mu$m.

In one embodiment, the particle diameter ($D_{50}$) of the third lithium metal oxide particles may be 1 $\mu$m to 9 $\mu$m, in one embodiment 1 $\mu$m to 7 $\mu$m, and in one embodiment 1 $\mu$m to 5 $\mu$m. Accordingly, the output characteristics of the lithium secondary battery may be further improved.

For example, the particle diameter ($D_{50}$) is a particle diameter based on 50% of volume accumulation in the particle size distribution, and may be measured by a laser diffraction method.

In one embodiment, a ratio of the particle diameter ($D_{50}$) of the third lithium metal oxide particles to the particle diameter ($D_{50}$) of the second lithium metal oxide particles may be 0.75 or more and less than 1.4. Within the above range, the resistance characteristics of the cathode, as well as the output characteristics and the rapid charging performance of the lithium secondary battery may be further improved.

In some embodiments, the ratio of the particle diameter ($D_{50}$) of the third lithium metal oxide particles to the particle diameter ($D_{50}$) of the second lithium metal oxide particles may be 0.8 to 1.35, 0.85 to 1.3, 0.9 to 1.25, 0.9 to 1.2, or 0.9 to 1.1.

In one embodiment, each of the first lithium metal oxide particles, the second lithium metal oxide particles and the third lithium metal oxide particles may contain nickel.

In some embodiments, each of the first lithium metal oxide particles, the second lithium metal oxide particles and the third lithium metal oxide particles may further contain cobalt and manganese.

In some embodiments, each of the first lithium metal oxide particles, the second lithium metal oxide particles and the third lithium metal oxide particles may be represented by Formula 1 below.

[Formula 1] $\quad\quad\quad$ $Li_xNi_{(1-a-b)}M1_aM2_bO_y$

In Formula 1, M1 and M2 may independently be at least one of Co, Mn, Al, Zr, Ti, Cr, B, Mn, Ba, Si, Y, W and Sr, and may be x, y, a and b may satisfy $0.9{\leq}x{\leq}1.2$, $1.9{\leq}y{\leq}2.1$, $0{\leq}a+b{\leq}0.5$.

In some embodiments, x may be in a range of $0.9{\leq}x{\leq}1.1$.

In some embodiments, a and b may satisfy $0<a+b{\leq}0.4$, $0<a+b{\leq}0.3$, or $0<a+b{\leq}0.2$.

In one embodiment, a concentration of nickel in the first lithium metal oxide particles may be greater than the concentration of nickel in the second lithium metal oxide particles. The concentration of nickel may mean a molar ratio of nickel based on the total number of moles of all elements except for lithium and oxygen in the lithium metal oxide particles. In this case, the capacity, life-span characteristics and high-temperature storage characteristics of the lithium secondary battery may be further improved.

In some embodiments, a difference between the concentration of nickel in the first lithium metal oxide particles and the concentration of nickel in the second lithium metal oxide particles may be 0.05 or more, 0.1 or more, 0.2 or more, or 0.3 or more. In addition, the difference between the concentrations of nickels may be 0.5 or less.

In one embodiment, a concentration of nickel in the third lithium metal oxide particles may be greater than the concentration of nickel in the second lithium metal oxide particles.

In some embodiments, a difference between the concentration of nickel in the second lithium metal oxide particles and the concentration of nickel in the third lithium metal oxide particles may be 0.05 or more, 0.1 or more, 0.2 or more, or 0.3 or more. In addition, the difference between the concentrations of nickels may be 0.5 or less.

In one embodiment, the first lithium metal oxide particles, the second lithium metal oxide particles and the third lithium metal oxide particles may further contain a doping element. For example, the doping element may include Al, Ti, Ba, Zr, Si, B, Mg, P, Sr, W, La and the like.

In one embodiment, coating layers may be formed on the surfaces of the first lithium metal oxide particles, the second lithium metal oxide particles and the third lithium metal oxide particles. For example, the coating layer may contain Al, Ti, Ba, Zr, Si, B, Mg, P, Sr, W, La and the like.

**Lithium secondary battery**

FIG. 2 is a schematic plan view of a lithium secondary battery according to an embodiment of the present disclosure, and FIG. 3 is a cross-sectional view taken on line I-I' of FIG. 2.

Referring to FIGS. 2 and 3, the lithium secondary battery may include a cathode 100 and an anode 130 disposed to face the cathode 100.

The cathode 100 may be the above-described cathode for a lithium secondary battery.

The anode 130 may include an anode current collector 125 and an anode active material layer 120 formed on the anode current collector 125. For example, the anode active material layer 120 may be formed on one surface or both surfaces of the anode current collector 125.

For example, the anode active material layer 120 may include an anode active material. In one embodiment, the anode active material layer 120 may further include a binder, a conductive material, etc.

For example, the anode current collector 125 may include gold, stainless steel, nickel, aluminum, titanium, copper or an alloy thereof.

For example, the anode active material may be a material capable of intercalating and deintercalating lithium ions. For example, the anode active material may include a lithium alloy, a carbon-based active material, a silicon-based active material, etc., and these may be used alone or in combination of two or more thereof.

For example, the lithium alloy may include aluminum, zinc, bismuth, cadmium, antimony, silicon, lead, tin, gallium, indium and the like.

In some embodiments, the carbon-based active material may include crystalline carbon, amorphous carbon, carbon composite, carbon fiber and the like. For example, the amorphous carbon may include hard carbon, cokes, mesocarbon microbead, mesophase pitch-based carbon fiber and the like. For example, the crystalline carbon may include natural graphite, graphite cokes, graphite MCMB, graphite MPCF or the like.

In one embodiment, the anode active material may include a silicon-based active material. For example, the silicon-based active material may include Si, $SiO_x$ (0<x<2), Si/C, SiO/C, Si-metal and the like. In this case, it is possible to implement a lithium secondary battery having a high capacity.

In some embodiments, the anode 130 may have an area greater than that of the cathode 100. Accordingly, lithium ions generated from the cathode 100 may smoothly move to the anode 130 without precipitation in the middle.

For example, the cathode 100 and the anode 130 may be alternately and repeatedly disposed to form an electrode assembly 150.

In one embodiment, a separation membrane 140 may be interposed between the cathode 100 and the anode 130. For example, the electrode assembly 150 may be formed by winding, stacking, z-folding, etc. the separation membrane 140

For example, the separation membrane 140 may include a porous polymer film made of a polyolefin polymer such as ethylene homopolymer, propylene homopolymer, ethylene-butene copolymer, ethylene-hexene copolymer, ethylene-methacrylate copolymer or the like. Alternatively, for example, the separation membrane 140 may include a nonwoven fabric made of glass fiber having a high melting point, polyethylene terephthalate fiber or the like.

For example, the electrode assembly 150 and the electrolyte may be housed in the case 160 to form a lithium secondary battery.

For example, the lithium secondary battery may be manufactured, for example, in a cylindrical shape, a square shape, a pouch type or a coin shape.

In one embodiment, the electrolyte may include a lithium salt and an organic solvent.

In one embodiment, the lithium salt may include $Li^+X^-$. For example, $X^-$ may be at least one of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In some embodiments, the lithium salt may include $LiBF_4$, $LiPF_6$, etc.

In one embodiment, the organic solvent may include a carbonate solvent, an ester (carboxylate) solvent, an ether solvent, a ketone solvent, an alcohol solvent, an aprotic solvent, etc.

For example, the carbonate solvent may include dimethyl carbonate (DMC), ethyl methyl carbonate (EMC), diethyl carbonate (DEC), ethylene carbonate (EC), etc.

For example, the ester solvent may include methyl propionate, ethyl propionate, propyl acetate, butyl acetate, ethyl acetate, butyrolactone, caprolactone, valerolactone, etc.

For example, the ether solvent may include dibutyl ether, tetraethylene glycol dimethyl ether (TEGDME), diethylene glycol dimethyl ether (DEGDME), dimethoxyethane, tetrahydrofuran (THF), 2-methyltetrahydrofuran, etc.

For example, the ketone solvent may include cyclohexanone, etc.

For example, the alcohol solvent may include ethyl alcohol, isopropyl alcohol, etc.

For example, the aprotic solvent may include a nitrile solvent, an amide solvent (e.g., dimethylformamide), a dioxolane solvent (e.g., 1,3-dioxolane), a sulfolane solvent, etc.

In one embodiment, the lithium secondary battery may include: a cathode lead 107 connected to the cathode 100 and protruding outwardly from the case 160; and an anode lead 127 connected to the anode 130 and protruding outwardly from the case 160.

For example, the cathode lead 107 may be electrically connected to the cathode current collector 105. In addition, the anode lead 127 may be electrically connected to the anode current collector 125.

The cathode current collector 105 may include a cathode tab 106 protruding on one side. The cathode active material layer 110 may not be formed on the cathode tab 106. The cathode tab 106 may be integrally formed with the cathode current collector 105, or may be connected thereto by welding, etc. The cathode current collector 105 and the cathode lead 107 may be electrically connected through the cathode tab 106.

The anode current collector 125 may include an anode tab 126 protruding on one side. The anode active material layer 120 may not be formed on the anode tab 126. The anode tab 126 may be integrally formed with the anode current collector 125, or may be connected thereto by welding, etc. The anode current collector 125 and the anode lead 127 may be electrically connected through the anode tab 126.

Hereinafter, exemplary examples of the present invention will be described. However, the following examples are only examples of the present invention, and the present invention is not limited thereto.

**Preparative Example 1-1: Preparation of NCM 523 ($D_{50}$ = 10 $\mu$m) having a secondary particle form**

$NiSO_4$, $CoSO_4$ and $MnSO_4$ were input and mixed in a molar ratio of 5:2:3 in distilled water from which internal dissolved oxygen was removed, to prepare a mixed solution.

The mixed solution, NaOH (precipitant), and $NH_4OH$ (chelating agent) were put into a reactor, followed by performing co-precipitation for 30 hours to prepare metal hydroxide particles ($Ni_{0.5}Co_{0.2}Mn_{0.3}(OH)_2$). The metal hydroxide particles were dried at 80°C for 12 hours and then again dried at 110°C for 12 hours.

The metal hydroxide particles and lithium hydroxide were put into a dry high-speed mixer so that a molar ratio thereof was 1: 1.03, to prepare a mixture.

The mixture was put into a calcination furnace, and the temperature of the calcination furnace was increased to 700°C at a rate of 2°C/min, then maintained at 700°C for 15 hours. Oxygen gas was passed through the calcination furnace at a flow rate of 10 mL/min during calcination.

After the calcination was completed, the calcined product was cooled to room temperature, then pulverized and classified to obtain lithium metal oxide particles (NCM 523; $LiNi_{0.5}Co_{0.2}Mn_{0.3}O_2$) in the form of secondary particles.

A particle diameter ($D_{50}$) of the lithium metal oxide particles was measured. The particle diameter ($D_{50}$) is a particle diameter based on 50% of volume accumulation in the particle size distribution, and was measured according to the laser diffraction method (Microtrac, MT 3000). The measured particle diameter ($D_{50}$) was 10 $\mu$m.

**Preparative Example 1-2: Preparation of NCM 523 ($D_{50}$ = 5 $\mu$m) having a secondary particle form**

Lithium metal oxide particles ($D_{50}$ = 5 $\mu$m) having a secondary particle form were prepared by performing the same procedures as described in Preparative Example 1-1 except that the co-precipitation reaction time was changed.

**Preparative Example 1-3: Preparation of NCM 523 ($D_{50}$ = 7 $\mu$m) having a secondary particle form**

Lithium metal oxide particles ($D_{50}$ = 7 $\mu$m) having a secondary particle form were prepared by performing the same procedures as described in Preparative Example 1-1 except that the co-precipitation reaction time was changed.

**Preparative Example 1-4: Preparation of NCM 811 ($D_{50}$ = 10 $\mu$m) having a secondary particle form**

Lithium metal oxide particles (NCM 811; $LiNi_{0.8}Co_{0.1}Mn_{0.1}O_2$, $D_{50}$=10 $\mu$m) having a secondary particle form were prepared by performing the same procedures as described in Preparative Example 1-1 except that $NiSO_4$, $CoSO_4$ and $MnSO_4$ were used in a molar ratio of 8:1:1.

**Preparative Example 1-5: Preparation of NCM 811 ($D_{50}$ = 5 $\mu$m) having a secondary particle form**

Lithium metal oxide particles ($D_{50}$ = 5 $\mu$m) having a secondary particle form were prepared by performing the same procedures as described in Preparative Example 1-4 except that the co-precipitation reaction time was changed.

**Preparative Example 2-1: Preparation of NCM 523 ($D_{50}$ = 5 $\mu$m) having a single particle form**

$NiSO_4$, $CoSO_4$ and $MnSO_4$ were input and mixed in a molar ratio of 5:2:3 in distilled water from which internal dissolved oxygen was removed, to prepare a mixed solution.

The mixed solution, NaOH (precipitant), and $NH_4OH$ (chelating agent) were put into a reactor, followed by performing co-precipitation for 72 hours to prepare metal hydroxide particles ($Ni_{0.5}Co_{0.2}Mn_{0.3}(OH)_2$). The metal hydroxide particles were dried at 100°C for 12 hours, and then again dried at 120°C for 12 hours.

The metal hydroxide particles and lithium hydroxide were put into a dry high-speed mixer so that a molar ratio thereof was 1:1.03, to prepare a mixture.

The mixture was put into a calcination furnace, and the temperature of the calcination furnace was increased to 980°C at a rate of 2°C/min, then maintained at 980°C for 12 hours. Oxygen gas was passed through the calcination furnace at a flow rate of 10 mL/min during calcination.

After the calcination was completed, the calcined product was cooled to room temperature, then pulverized and classified to obtain lithium metal oxide particles (LiNi$_{0.5}$Co$_{0.2}$Mn$_{0.3}$O$_2$) in the form of single particles.

A particle diameter (D$_{50}$) of the lithium metal oxide particles was measured. The particle diameter (D$_{50}$) is a particle diameter based on 50% of volume accumulation in the particle size distribution, and was measured according to the laser diffraction method (Microtrac, MT 3000). The measured particle diameter (D$_{50}$) was 5 μm.

**Preparative Example 2-2: Preparation of NCM 523 (D$_{50}$ = 7 μm) having a single particle form**

Lithium metal oxide particles (D$_{50}$ = 7 μm) having a single particle form were prepared by performing the same procedures as described in Preparative Example 2-1 except that the co-precipitation reaction time was changed.

**Examples and Comparative Examples**

**Example 1**

**(1) Preparation of cathode (including cathode active material layer with three-layer structure)**

The lithium metal oxide particles of Preparation Example 1-1, carbon nanotubes (CNTs) and PVDF were mixed in a weight ratio of 98:1:1, then dispersed in N-methyl-2-pyrrolidone (NMP) to prepare a first cathode slurry.

The lithium metal oxide particles of Preparation Example 2-1, carbon nanotubes (CNTs) and PVDF were mixed in a weight ratio of 98:1:1, then dispersed in NMP to prepare a second cathode slurry.

The lithium metal oxide particles of Preparation Example 1-2, carbon nanotubes (CNTs) and PVDF were mixed in a weight ratio of 98:1:1, then dispersed in NMP to prepare a third cathode slurry.

The first cathode slurry, the second cathode slurry and the third cathode slurry were sequentially applied to a region of an aluminum foil having a protrusion part (cathode tab) on one side except for the protrusion part, followed by drying and pressing the same to prepare a cathode including a first cathode active material layer, a second cathode active material layer and a third cathode active material layer.

A density (i.e., pressing density) of the cathode active material layer was adjusted to 3.5 g/cc. A total thickness of the cathode active material layer was adjusted to 150 μm. Application amounts of the first cathode slurry to the third cathode slurry were adjusted so that the first cathode active material layer to the third cathode active material layer satisfied the thickness relationships described in Table 1.

**(2) Manufacturing of lithium secondary battery**

Artificial graphite, carbon nanotubes (CNTs), SBR and CMC were mixed in a weight ratio of 95:3:1:1, then dispersed in distilled water to prepare an anode slurry.

The anode slurry was applied to a region of a copper foil having a protrusion part (anode tab) on one side except for the protrusion part, followed by drying and pressing the same to prepare an anode.

A polyethylene separation membrane (thickness: 20 μm) was interposed between the cathode and the anode to form an electrode assembly. A cathode lead and an anode lead were welded to the cathode tab and the anode tab, respectively.

1 M LiPF$_6$ solution (a mixed solvent of EC and EMC in a ratio of 30:70 v/v) was prepared. An electrolyte was prepared by adding 1 wt% of fluoroethylene carbonate (FEC), 1 wt% of LiPO$_2$F2 (lithium difluorophosphate), 0.5 wt% of 1,3-propane sultone (PS), and 0.5 wt% of prop-1-ene-1,3-sultone (PRS) based on a total weight of the electrolyte.

The electrode assembly was housed in a pouch so that some regions of the cathode lead and the anode lead were exposed to an outside of the pouch, followed by sealing three sides of the pouch except for a side of an electrolyte injection part.

A lithium secondary battery was manufactured by injecting the electrolyte into the pouch and sealing the side of the electrolyte injection part.

**Examples 2 to 7**

Cathodes and lithium secondary batteries were manufactured by the same procedures as described in Example 1, except that the thicknesses of the first cathode active material layer to the third cathode active material layer were adjusted differently, by differently regulating the application amounts of the first cathode slurry to the third cathode slurry.

However, the total thickness of the cathode active material layer was maintained the same as in Example 1.

### Example 8

A cathode and a lithium secondary battery were manufactured by the same procedures as described in Example 1, except that the lithium metal oxide particles of Preparation Examples 1-3 were used when preparing the third cathode slurry.

### Example 9

A cathode and a lithium secondary battery were manufactured by the same procedures as described in Example 1, except that the lithium metal oxide particles of Preparation Example 2-2 were used when preparing the second cathode slurry.

### Example 10

A cathode and a lithium secondary battery were manufactured by the same procedures as described in Example 1, except that the lithium metal oxide particles of Preparation Example 1-4 were used when preparing the first cathode slurry, and the lithium metal oxide particles of Preparation Example 1-5 were used when preparing the third cathode slurry.

### Comparative Example 1

The first cathode slurry and the second cathode slurry were sequentially applied to an aluminum foil, followed by drying and pressing the same to prepare a cathode including a first cathode active material layer and a second cathode active material layer.

The thickness of the first cathode active material layer and the thickness of the second cathode active material layer were adjusted to be 1:1. The total thickness of the cathode active material layer was maintained the same as in Example 1.

A lithium secondary battery was manufactured by the same procedures as described in Example 1, except that the cathode was used.

### Comparative Example 2

The second cathode slurry and the first cathode slurry were sequentially applied to an aluminum foil, followed by drying and pressing the same to prepare a cathode including a first cathode active material layer and a second cathode active material layer.

The thickness of the first cathode active material layer and the thickness of the second cathode active material layer were adjusted to be 1:1. The total thickness of the cathode active material layer was maintained the same as in Example 1.

A lithium secondary battery was manufactured by the same procedures as described in Example 1, except that the cathode was used.

### Comparative Example 3

The second cathode slurry, the first cathode slurry and the second cathode slurry were sequentially applied to an aluminum foil, followed by drying and pressing the same to prepare a cathode including a first cathode active material layer, a second cathode active material layer and a third cathode active material layer.

A lithium secondary battery was manufactured by the same procedures as described in Example 1, except that the cathode was used.

### Experimental Example 1: Measurement of thickness of the first cathode active material layer to the third cathode active material layer

The cathodes of the examples and Comparative Example 3 were cut in a width direction (i.e., a direction in which a minor axis of the cathode extends), and cross-sections were measured using a scanning electron microscope (SEM).

In the cross-sectional SEM images, thicknesses T1, T2 and T3 of each of the first cathode active material layer, the second cathode active material layer and the third cathode active material layer were measured.

However, during pressing, a small amount of lithium metal oxide particles in the form of single particles may be introduced between the lithium metal oxide particles in the form of secondary particles. Accordingly, an introduction region may be formed between the first cathode active material layer and the second cathode active material layer. The thickness of the introduction region was considered as a thickness of the layer (e.g., the first cathode active material layer) into which the lithium metal oxide particles in the form of single particles are introduced.

Values of Equations 1 to 3 below were calculated using the measured T1 to T3.

$$[\text{Equation 1}]$$

$$T2/(T1+T2+T3)$$

$$[\text{Equation 2}]$$

$$T1/(T2+T3)$$

$$[\text{Equation 3}]$$

$$T3/(T1+T2)$$

### Experimental Example 2: Measurement of cathode bulk resistance and interface resistance

Interface resistances (resistance between the cathode active material layer and the cathode current collector) and bulk resistances (resistance of the cathode active material layer) of the cathodes of the examples were measured.

The interface resistance and the bulk resistance were measured using a Resistivity Meter from Hioki.

A current was passed through the surface of the cathode active material layer, and potentials generated at the surface were measured at multiple points. The cathode was modeled as a three-dimensional resistance matrix, and the potentials were calculated by passing a current through the three-dimensional resistance matrix in a computer simulation, and a resistance value when the measured surface potential distribution and the simulated potential distribution matched was taken as the bulk resistance.

### Experimental Example 3

#### (1) Measurement of high-temperature storage capacity retention rate

The lithium secondary batteries of the examples and comparative examples were repeatedly subjected to CC/CV charge (0.5C 4.2 V, 0.05C CUT-OFF) and CC discharge (0.5C 2.7 V CUT-OFF) at 25°C three times, and discharge capacities H1 were measured at the third cycle.

The lithium secondary batteries were again subjected to CC/CV charge (0.5C 4.2 V 0.05C CUT-OFF).

The charged lithium secondary batteries were stored at 60°C for 12 weeks, then additionally left at room temperature for 30 minutes, and subjected to CC discharge (0.5C 2.75 V CUT-OFF), then discharge capacities H2 were measured.

The capacity retention rate was calculated by the following equation.

$$\text{Capacity retention rate (\%)} = H2/H1 \times 100(\%)$$

#### (2) Measurement of high-temperature storage DCIR increase rate

The lithium secondary batteries of the examples and comparative examples were subjected to 0.5C CC/CV charge (4.2 V 0.05C CUT-OFF) at 25°C, then 0.5C CC discharge up to state-of-charge (SOC) 60%.

The lithium secondary batteries were discharged and supplementary charged for 10 seconds, while changing C-rate to 0.2C 0.5C, 1C, 1.5C, 2C, 2.5C and 3.0C at the SOC 60% point, and DCIR R1 was measured, respectively.

When performing charge and supplementary discharge, terminal points of the voltage were composed with an equation of a straight line and a slope thereof was adopted as the DCIR.

The charged lithium secondary batteries were left for 12 weeks under atmospheric exposure conditions at 60°C, then additionally left for 30 minutes at room temperature, and DCIR R2 was measured, respectively, by the same method as described above.

The internal resistance increase rate was calculated by the following equation.

$$\text{Internal resistance increase rate (\%)} = (R2\text{-}R1)/R1 \times 100 \ (\%)$$

**(3) Confirmation of vent point**

The lithium secondary batteries of the examples and comparative examples were charged up to 100% SOC (CC/CV 0.33C, 4.3 V, 0.05C CUT OFF).

The charged lithium secondary batteries were left under atmospheric conditions at 60°C.

The point when a vent occurs at the sealing portion of the pouch was confirmed.

If the sealing portion was swollen or a separate air release hole occurred, it was evaluated that the vent has occurred.

**Experimental Example 4**

**(1) Measurement of fast charge capacity retention rate**

The lithium secondary batteries of the examples and comparative examples were charged at 0.33C up to SOC 8% at 25°C, and charged in steps of 2.5C-2.25C-2C-1.75C-1.5C-1.0C in a section of SOC 8-80%, and again charged at 0.33C (4.3 V, 0.05 C cut-off) in a section of SOC 80-100% for a total of 25 minutes. After setting the time to the same standard, CC discharge was performed at 0.33C up to 2.5 V.

Discharge capacities S1 were measured at the first cycle, and the charge and discharge were repeated 100 times, and discharge capacities S2 were measured at the 100th cycle.

The fast charge capacity retention rate was calculated as the following equation.

$$\text{Fast charge capacity retention rate (\%)} = S2/S1 \times 100 (\%)$$

**(2) Measurement of cycle capacity retention rate (life-span)**

The lithium secondary batteries of the examples and comparative examples were subjected to CC/CV charge (0.33C 4.3 V 0.05C CUT-OFF) and CC discharge (0.33C 2.5 V CUT-OFF) at 45°C.

One charging and discharging was conducted to measure the discharge capacity C1. The charging and discharging were repeated 500 times, and discharge capacities C2 at the 500th cycle was measured.

The cycle capacity retention rate was calculated according to the following equation.

$$\text{Cycle capacity retention rate (\%)} = C2/C1 \times 100 (\%)$$

[TABLE 1]

| | First cathode active material layer | Second cathode active material layer | Third cathode active material layer | T2/(T1+T2+T3) | T1/(T2+T3) | T3/(T1+T2) |
|---|---|---|---|---|---|---|
| Example 1 | Secondary particle NCM 523D50=10 μm | Single particle NCM 523D50=5 μm | Secondary particle NCM 523D50=5 μm | 0.33 | 0.5 | 0.5 |
| Example 2 | Secondary particle NCM 523D50=10 μm | Single particle NCM 523D50=5 μm | Secondary particle NCM 523D50=5 μm | 0.18 | 0.69 | 0.69 |
| Example 3 | Secondary particle NCM 523D50=10 μm | Single particle NCM 523D50=5 μm | Secondary particle NCM 523D50=5 μm | 0.72 | 0.16 | 0.16 |
| Example 4 | Secondary particle NCM 523D50=10 μm | Single particle NCM 523D50=5 μm | Secondary particle NCM 523D50=5 μm | 0.67 | 0.11 | 0.30 |

(continued)

| | | First cathode active material layer | Second cathode active material layer | Third cathode active material layer | T2/(T1+T2+T3) | T1/(T2+T3) | T3/(T1+T2) |
|---|---|---|---|---|---|---|---|
| | Example 5 | Secondary particle NCM 523D50=10 μm | Single particle NCM 523D50=5 μm | Secondary particle NCM 523D50=5 μm | 0.33 | 0.88 | 0.25 |
| | Example 6 | Secondary particle NCM 523D50=10 μm | Single particle NCM 523D50=5 μm | Secondary particle NCM 523D50=5 μm | 0.67 | 0.30 | 0.11 |
| | Example 7 | Secondary particle NCM 523D50=10 μm | Single particle NCM 523D50=5 μm | Secondary particle NCM 523D50=5 μm | 0.33 | 0.25 | 0.88 |
| | Example 8 | Secondary particle NCM 523D50=10 μm | Single particle NCM 523D50=5 μm | Secondary particle NCM 523D50=7 μm | 0.33 | 0.5 | 0.5 |
| | Example 9 | Secondary particle NCM 523D50=10 μm | Single particle NCM 523D50=7 μm | Secondary particle NCM 523D50=5 μm | 0.33 | 0.5 | 0.5 |
| | Example 10 | Secondary particle NCM 811D50=10 μm | Single particle NCM 523D50=5 μm | Secondary particle NCM 811D50=5 μm | 0.33 | 0.5 | 0.5 |
| | Comparative Example 1 | Secondary particle NCM523D50=10 μm | Single particle NCM 523D50=5 μm | - | 0.5 | 1 | - |
| | Comparative Example 2 | Single particle NCM 523D50=5 μm | Secondary particle NCM523D50=10 μm | - | 0.5 | 1 | - |
| | Comparative Example 3 | Single particle NCM 523D50=5 μm | Secondary particle NCM523D50=10 μm | Single particle NCM 523D50=5 μm | 0.33 | 0.5 | 0.5 |

[TABLE 2]

| | Cathode bulk resistance (Ωcm) | Cathode interface resistance (Ωcm$^2$) | High-temperatu re storage capacity retention rate (%) | High-temperatu re storage DCIR increase rate (%) | Vent point (weeks) | Fast charge capacity retention rate (%) | Cycle capacity retention rate (%) |
|---|---|---|---|---|---|---|---|
| Example 1 | 3.15 | 0.03 | 98 | 115 | 24 | 98 | 98 |
| Example 2 | 2.89 | 0.03 | 96 | 114 | 15 | 99 | 98 |
| Example 3 | 3.32 | 0.03 | 99 | 121 | 27 | 92 | 96 |
| Example 4 | 3.38 | 0.03 | 99 | 120 | 26 | 94 | 96 |
| Example 5 | 3.10 | 0.03 | 98 | 116 | 24 | 97 | 97 |
| Example 6 | 3.31 | 0.03 | 99 | 122 | 25 | 90 | 96 |
| Example 7 | 3.32 | 0.03 | 98 | 113 | 23 | 98 | 98 |
| Example 8 | 3.35 | 0.03 | 98 | 117 | 22 | 94 | 98 |
| Example 9 | 3.30 | 0.03 | 98 | 117 | 24 | 96 | 98 |
| Example 10 | 3.33 | 0.03 | 93 | 116 | 18 | 98 | 95 |

(continued)

|  | Cathode bulk resistance ($\Omega$cm) | Cathode interface resistance ($\Omega$cm$^2$) | High-temperatu re storage capacity retention rate (%) | High-temperatu re storage DCIR increase rate (%) | Vent point (weeks) | Fast charge capacity retention rate (%) | Cycle capacity retention rate (%) |
|---|---|---|---|---|---|---|---|
| Comparative Example 1 | 3.16 | 0.03 | 98 | 118 | 22 | 95 | 96 |
| Comparative Example 2 | 4.25 | 0.13 | 95 | 111 | 19 | 97 | 96 |
| Comparative Example 3 | 4.21 | 0.12 | 98 | 120 | 24 | 91 | 94 |

Referring to Tables 1 and 2 above, the lithium secondary batteries of the examples had improved resistance characteristics, life-span characteristics, high-temperature storage characteristics, and/or output characteristics of the cathode compared to the lithium secondary batteries of the comparative examples.

**Claims**

1. A cathode for a lithium secondary battery comprising:

   a cathode current collector;
   a first cathode active material layer formed on the cathode current collector, and comprising first lithium metal oxide particles having a form of secondary particles in which primary particles are aggregated;
   a second cathode active material layer formed on the first cathode active material layer, and comprising second lithium metal oxide particles having a form of single particles; and
   a third cathode active material layer formed on the second cathode active material layer, and comprising third lithium metal oxide particles having a form of secondary particles in which primary particles are aggregated.

2. The cathode for a lithium secondary battery according to claim 1, wherein the cathode satisfies Equation 1 below:

$$[\text{Equation 1}]$$

$$0.2 \leq T2/(T1+T2+T3) \leq 0.7$$

   (in Equation 1, T1 is a thickness of the first cathode active material layer in a cross-sectional image of the cathode measured by SEM ("SEM image"),
   T2 is a thickness of the second cathode active material layer in the SEM image,
   T3 is a thickness of the third cathode active material layer in the SEM image).

3. The cathode for a lithium secondary battery according to claim 1 or 2, wherein the cathode satisfies Equation 2 below:

$$[\text{Equation 2}]$$

$$0.15 \leq T1/(T2+T3) \leq 0.85$$

   (in Equation 2, T1 is a thickness of the first cathode active material layer in a cross-sectional image of the cathode measured by SEM ("SEM image"),
   T2 is a thickness of the second cathode active material layer in the SEM image,
   T3 is a thickness of the third cathode active material layer in the SEM image).

4. The cathode for a lithium secondary battery according to any one of claims 1 to 3, wherein the cathode satisfies

Equation 3 below:

$$[\text{Equation 3}]$$

$$0.15 \leq T3/(T1+T2) \leq 0.85$$

(in Equation 3, T1 is a thickness of the first cathode active material layer in a cross-sectional image of the cathode measured by SEM ("SEM image"),
T2 is a thickness of the second cathode active material layer in the SEM image,
T3 is a thickness of the third cathode active material layer in the SEM image).

5. The cathode for a lithium secondary battery according to any one of claims 1 to 4, wherein a sum of a thickness of the first cathode active material layer, a thickness of the second cathode active material layer and a thickness of the third cathode active material layer is 40 $\mu$m to 180 $\mu$m.

6. The cathode for a lithium secondary battery according to any one of claims 1 to 5, wherein a content of the first lithium metal oxide particles based on a total weight of the first cathode active material layer is 90% by weight or more.

7. The cathode for a lithium secondary battery according to any one of claims 1 to 6, wherein a content of the second lithium metal oxide particles based on a total weight of the second cathode active material layer is 90% by weight or more.

8. The cathode for a lithium secondary battery according to any one of claims 1 to 7, wherein a content of the third lithium metal oxide particles based on a total weight of the third cathode active material layer is 90% by weight or more.

9. The cathode for a lithium secondary battery according to any one of claims 1 to 8, wherein each of the first lithium metal oxide particles and the second lithium metal oxide particles contains nickel (Ni), and
a concentration of nickel in the first lithium metal oxide particles is greater than a concentration of nickel in the second lithium metal oxide particles.

10. The cathode for a lithium secondary battery according to any one of claims 1 to 9, wherein each of the second lithium metal oxide particles and the third lithium metal oxide particles contains nickel (Ni), and
a concentration of nickel in the third lithium metal oxide particles is greater than the concentration of nickel in the second lithium metal oxide particles.

11. The cathode for a lithium secondary battery according to any one of claims 1 to 10, wherein a particle diameter ($D_{50}$) of the first lithium metal oxide particles is greater than a particle diameter ($D_{50}$) of the second lithium metal oxide particles.

12. The cathode for a lithium secondary battery according to any one of claims 1 to 11, wherein a particle diameter ($D_{50}$) of the third lithium metal oxide particles is smaller than the particle diameter ($D_{50}$) of the first lithium metal oxide particles.

13. The cathode for a lithium secondary battery according to any one of claims 1 to 12, wherein a ratio of a particle diameter ($D_{50}$) of the third lithium metal oxide particles to a particle diameter ($D_{50}$) of the second lithium metal oxide particle is 0.75 or more and less than 1.4.

14. The cathode for a lithium secondary battery according to any one of claims 1 to 13, wherein the first lithium metal oxide particles have a particle diameter ($D_{50}$) of 5 $\mu$m to 15 $\mu$m, and
the second lithium metal oxide particles and the third lithium metal oxide particles have a particle diameter ($D_{50}$) of 1 $\mu$m to 5 $\mu$m, respectively.

15. A lithium secondary battery comprising:

the cathode for a lithium secondary battery according to any one of claims 1 to 14; and
an anode disposed to face the cathode.

[FIG. 1]

[FIG. 2]

[FIG. 3]

## INTERNATIONAL SEARCH REPORT

| International application No. |
| --- |
| **PCT/KR2023/011314** |

**A.    CLASSIFICATION OF SUBJECT MATTER**

**H01M 4/131**(2010.01)i; **H01M 4/525**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/131(2010.01); C01G 53/00(2006.01); H01B 1/06(2006.01); H01B 13/00(2006.01); H01M 10/052(2010.01); H01M 4/13(2010.01); H01M 4/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 1차 입자(primary particle), 2차 입자(secondary particle), 양극(cathode), 리튬 (lithium), 산화물(oxide), 활물질(active material), 두께(thickness), 니켈(nickel), 3층(third layer)

**C.    DOCUMENTS CONSIDERED TO BE RELEVANT**

| Category* | Citation of document, with indication, where appropriate, of the relevant passages | Relevant to claim No. |
| --- | --- | --- |
| Y | KR 10-2020-0135060 A (SAMSUNG SDI CO., LTD. et al.) 02 December 2020 (2020-12-02) <br> See paragraphs [0073]-[0091], [0110] and [0137]-[0144]; and figures 3 and 5. | 1-15 |
| Y | KR 10-2022-0116943 A (SK ON CO., LTD.) 23 August 2022 (2022-08-23) <br> See paragraphs [0029]-[0043], [0059], [0070]-[0090], [0101] and [0104]; and figure 1. | 1-15 |
| Y | JP 2022-112207 A (PRIME PLANET ENERGY & SOLUTIONS INC.) 02 August 2022 (2022-08-02) <br> See paragraphs [0031]-[0062] and [0087]; and figures 1-3. | 1-15 |
| A | JP 2013-120724 A (SONY CORP.) 17 June 2013 (2013-06-17) <br> See claims 1-15. | 1-15 |
| A | WO 2019-151363 A1 (FUJIFILM CORPORATION) 08 August 2019 (2019-08-08) <br> See claims 1-23. | 1-15 |

☐ Further documents are listed in the continuation of Box C.   ☑ See patent family annex.

| | |
| --- | --- |
| *    Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **30 October 2023** | **31 October 2023** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/011314**

| Patent document cited in search report | | | Publication date (day/month/year) | Patent family member(s) | | | Publication date (day/month/year) |
|---|---|---|---|---|---|---|---|
| KR | 10-2020-0135060 | A | 02 December 2020 | CN | 113906586 | A | 07 January 2022 |
| | | | | EP | 3979364 | A1 | 06 April 2022 |
| | | | | JP | 2022-534232 | A | 28 July 2022 |
| | | | | JP | 2023-096039 | A | 06 July 2023 |
| | | | | JP | 7282925 | B2 | 29 May 2023 |
| | | | | KR | 10-2020-0144395 | A | 29 December 2020 |
| | | | | KR | 10-2022-0150842 | A | 11 November 2022 |
| | | | | KR | 10-2022-0159322 | A | 02 December 2022 |
| | | | | KR | 10-2510888 | B1 | 16 March 2023 |
| | | | | KR | 10-2510889 | B1 | 16 March 2023 |
| | | | | US | 2022-0328807 | A1 | 13 October 2022 |
| | | | | WO | 2020-242138 | A1 | 03 December 2020 |
| KR | 10-2022-0116943 | A | 23 August 2022 | CN | 114944468 | A | 26 August 2022 |
| | | | | EP | 4053945 | A2 | 07 September 2022 |
| | | | | US | 2022-0263078 | A1 | 18 August 2022 |
| JP | 2022-112207 | A | 02 August 2022 | CN | 114824187 | A | 29 July 2022 |
| | | | | JP | 7273869 | B2 | 15 May 2023 |
| | | | | US | 2022-0238865 | A1 | 28 July 2022 |
| JP | 2013-120724 | A | 17 June 2013 | CN | 103165935 | A | 19 June 2013 |
| | | | | CN | 106099040 | A | 09 November 2016 |
| | | | | JP | 5807749 | B2 | 10 November 2015 |
| | | | | US | 2013-0149604 | A1 | 13 June 2013 |
| | | | | US | 9287567 | B2 | 15 March 2016 |
| WO | 2019-151363 | A1 | 08 August 2019 | CN | 111512487 | A | 07 August 2020 |
| | | | | EP | 3751657 | A1 | 16 December 2020 |
| | | | | JP | 6985426 | B2 | 22 December 2021 |
| | | | | KR | 10-2020-0089719 | A | 27 July 2020 |
| | | | | US | 2021-0104773 | A1 | 08 April 2021 |
| | | | | WO | 2019-151363 | A1 | 08 August 2019 |

Form PCT/ISA/210 (patent family annex) (July 2022)